# EUROPÄISCHE PATENTANMELDUNG

(11) **EP 1 757 487 A1**
(43) Veröffentlichungstag der Anmeldung: **28.02.2007**
(21) Anmeldenummer: 06024430.8
(22) Anmeldetag: 12.12.2001
(51) Int. Cl.: B60Q 1/26

(54) **Außenrückblickspiegel für Fahrzeuge**

(30) Priorität: 16.12.2000 DE 20021312 U
(62) Teilanmeldung aus: 01129609.2
(71) Anmelder: Schefenacker Vision Systems Germany GmbH, 71409 Schwaikheim (DE)
(72) Erfinder: Zimmermann, Werner, 73113 Ottenbach (DE); Rommel, Bernd, 70736 Fellbach-Schmiden (DE)
(74) Vertreter: Kohl, Karl-Heinz

(57) **Zusammenfassung**

Der Außenrückblickspiegel hat einen Spiegelkopf (34), in dem ein Leuchtmittel vorgesehen ist und dessen Gehäuse (35) im Bereich (36) der vom Leuchtmittel ausgesandten Strahlen zumindest teilweise lichtdurchlässig ist. Das Leuchtmittel ist Teil einer Leuchte (5b), die mit ihrem Gehäuse im Gehäuse des Spiegelkopfes (34) untergebracht ist (Fig. 6).

## Beschreibung

Die Erfindung betrifft einen Außenrückblickspiegel für Fahrzeuge, vorzugsweise für Kraftfahrzeuge, nach dem Oberbegriff des Anspruches 1.

Bei diesem bekannten Außenrückblickspiegel (EP-A-0 972 680) ist im Gehäuse des Spiegelkopfes eine Leiterplatine untergebracht, auf der Leuchtmittel sitzen. Das von ihnen ausgesandte Licht strahlt durch einen lichtdurchlässigen Bereich in der Wandung des Spiegelkopfes. Die Innenseite des Gehäuses des Spiegelkopfes ist mit einem undurchsichtigen Belag versehen, der an den Stellen unterbrochen ist, an denen das Licht nach außen gelangen soll.

Der Erfindung liegt die Aufgabe zugrunde, den gattungsgemäßen Außenrückblickspiegel so auszubilden, daß eine einfache Herstellung gewährleistet ist.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel sitzt das Leuchtmittel innerhalb eines Leuchtengehäuses, das in das Gehäuse des Spiegelkopfes eingesetzt wird. Dadurch kann der Außenrückblickspiegel mit eingesetzter Leuchte einfach und kostengünstig gefertigt werden.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in Rückansicht ein Kraftfahrzeug mit einer erfindungsgemäßen Leuchte,
- Fig. 2: in vergrößerter Darstellung eine Ansicht der Leuchte gemäß Fig. 1,
- Fig. 3: in vergrößerter Darstellung einen Schnitt längs der Linie III-III in Fig. 2,
- Fig. 4: in vergrößerter Darstellung die eine Hälfte der Leuchte gemäß Fig.3,
- Fig. 5: in einem Schnitt eine zweite Ausführungsform einer erfindungsgemäßen Leuchte,
- Fig. 6: in Rückansicht einen Außenrückblickspiegel eines Kraftfahrzeuges mit einer weiteren Ausführungsform einer erfindungsgemäßen Leuchte.

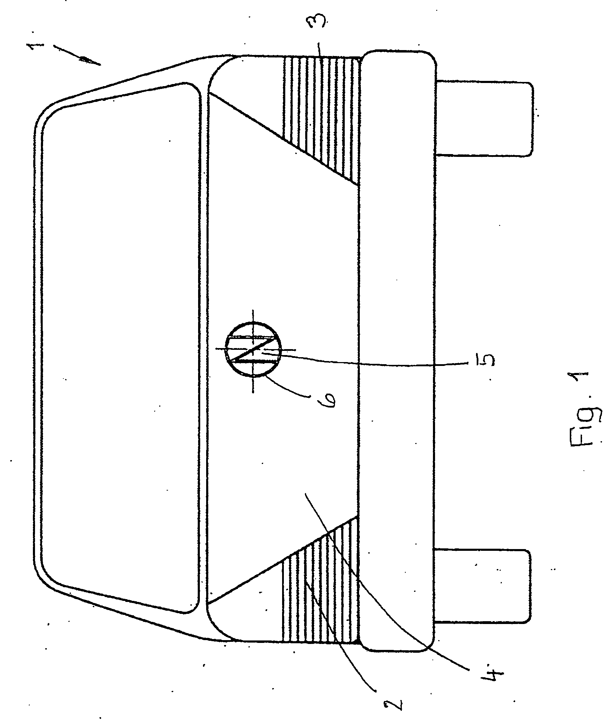

Fig. 1 zeigt in Rückansicht ein Kraftfahrzeug 1, das in bekannter Weise zwei Heckleuchten 2 und 3 aufweist. Zwischen den Heckleuchten 2, 3 erstreckt sich ein Kofferraumdeckel 4, dessen heruntergezogener Bereich mit einer Leuchte 5 versehen ist, die beispielsweise als dritte Bremsleuchte ausgebildet ist. Diese Leuchte 5 befindet sich auf der Innenseite des Kofferraumdekkels 4 im Bereich hinter einem Kraftfahrzeugemblem 6, das je nach Hersteller des Kraftfahrzeuges die unterschiedlichsten Formen und/oder Ausbildungen haben kann.

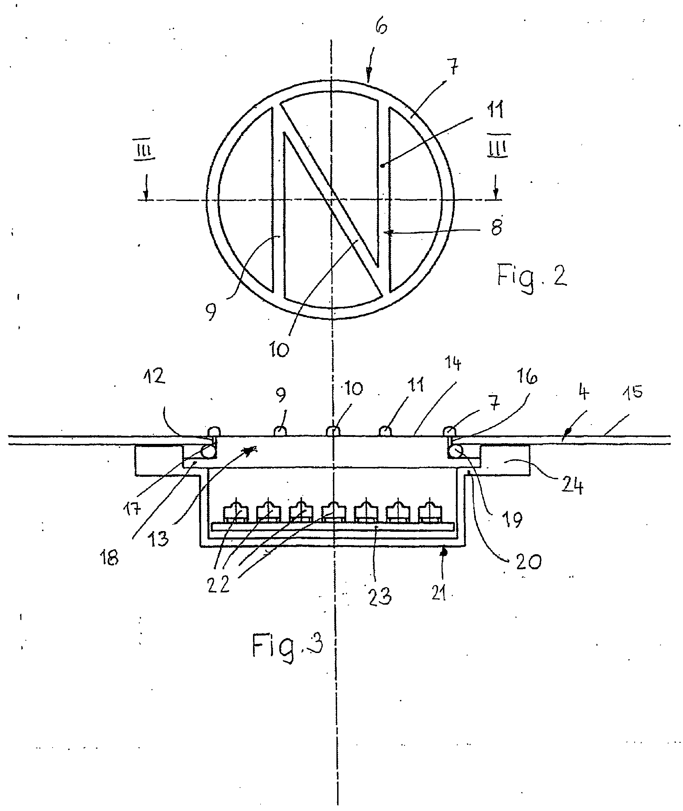

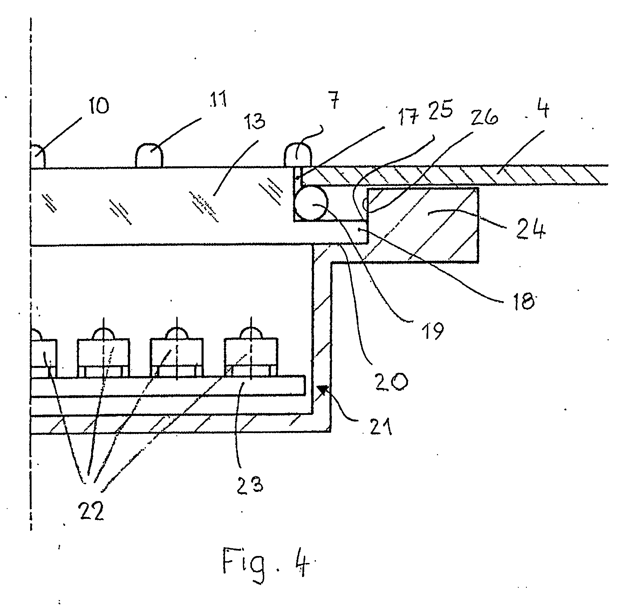

Im dargestellten Ausführungsbeispiel hat das Emblem einen kreisförmigen Ring 7 (Fig. 2), der ein N 8 umfaßt. Dieser Buchstabe hat zwei parallel zueinander liegende Stege 9, 11, die an ihren einander gegenüberliegenden Enden durch einen schrägen Steg 10 miteinander verbunden sind. Das Emblem 6 ist auf der Außenseite des Kofferraumdeckels 4 befestigt, beispielsweise aufgeklebt. Im Bereich dieses Emblems 6 ist der Kofferraumdeckel 4 mit einer Öffnung 12 versehen, in die eine Lichtscheibe 13 eingesetzt ist (Fig. 3). Sie füllt die Öffnung 13 nahezu vollständig aus. Die Außenseite 14 der Lichtscheibe 13 liegt bündig mit der Außenseite 15 des Kofferraumdekkels 4. Zwischen dem Rand der Lichtscheibe 13 und dem Rand 16 der Öffnung 12 verbleibt ein schmaler Spalt 17, der durch den Ring 7 des Emblems 6 von außen überdeckt wird. Die Lichtscheibe 13 ist in ihrer Umrißform an den Ring 7 angepaßt, so daß dieser den Spalt 17 von außen verdeckt. Dadurch sind aufwendige Maßnahmen zum Abdichten des Spaltes 17 von au-ßen nicht erforderlich. Darum sind bei der Herstellung der Öffnung 12 im Kofferraumdeckel 4 keine engen Toleranzen einzuhalten.

Die Lichtscheibe 13 ist mit Abstand von ihrer Außenseite 14 mit einem umlaufenden Bund 18 versehen, der radial nach außen gerichtet ist und zur Abstützung einer Ringdichtung 19 dient. Mit ihr wird der Spalt 17 von der Innenseite des Kofferraumdeckels 4 aus abgedichtet, so daß von außen keine Feuchtigkeit und/oder Schmutz nach innen gelangen kann. Beim Einbau der Lichtscheibe 13 wird die Ringdichtung 19 elastisch verformt, so daß sie den Spalt 17 optimal von innen abdichtet.

Die Lichtscheibe 13 liegt mit dem umlaufenden Flansch 18 auf einer radialen Schulterfläche 20 eines Leuchtengehäuses 21 auf, in dem wenigstens ein Leuchtmittel 22, im Ausführungsbeispiel LEDs, untergebracht sind. Sie sitzen auf einer im Leuchtengehäuse 21 untergebrachten Platine 23. Das Leuchtengehäuse 21 ist mit einem verdickten, umlaufenden Rand 24 an der Innenseite des Karosseriedeckels 4 befestigt, beispielsweise angeklebt.

Dieser Rand 24 überragt die radiale Schulterfläche 20, auf dem die Lichtscheibe 13 mit ihrem Bund 18 aufliegt. Er liegt außerdem mit seiner Umfangsfläche 25 an einer Innenseite 26 des Gehäuserandes 24 an (Fig. 4), so daß die Lichtscheibe 13 einwandfrei quer zu ihrer Achse lagegesichert ist. Die Innenseite 26 des Gehäuserandes 24 schließt rechtwinklig an die Schulterfläche 20 an.

Die Leuchtmittel 22 liegen mit Abstand hinter der Lichtscheibe 13 und strahlen das Licht durch die Lichtscheibe 13 nach außen. In das geschlossene Gehäuse 21 sind (nicht dargestellte) elektrische Zuleitungen geführt, um die Leuchtmittel 22 mit Strom zu versorgen.

Damit die Lichtscheibe 13, die aus lichtdurchlässigem Material, insbesondere einem entsprechenden Kunststoff besteht, von außen im Kofferraumdekkel 4 nicht zu erkennen ist, ist auf ihre Außenseite 14 eine Farbschicht aufgebracht, deren Farbton der Lackschicht auf dem Kofferraumdeckel 4 entspricht. Dadurch ist die Lichtscheibe 13 bei nicht eingeschalteten Leuchtmitteln 22 nicht als zusätzliches Bauteil im Kofferraumdeckel 4 zu erkennen. Darum ist bei nicht eingeschalteten Leuchtmitteln 22 am Kofferraumdeckel 4 lediglich das Emblem 6 sichtbar. Werden die Leuchtmittel 22 hingegen eingeschaltet,treten die von ihnen ausgesandten Strahlen durch die Lichtscheibe 13 und die Zwischenräume innerhalb des Emblems 6 nach außen. Die auf der Außenseite 14 der Lichtscheibe 13 aufgebrachte Farbschicht ist nur so dünn, daß das Licht mit ausreichender Helligkeit durch die Lichtscheibe 13 nach außen tritt. Die Leuchte 5 kann beispielsweise eine Bremsleuchte sein. Die Leuchtmittel 22 leuchten dann beim Betätigen der Bremse auf und senden ein entsprechendes Warnsignal durch die Lichtscheibe 13 nach hinten.

Die auf die Außenseite 14 der Lichtscheibe 13 aufgebrachte Farb- bzw. Lackschicht ist andererseits so dick, daß die Lichtscheibe von außen nicht durchscheint, so daß der Kofferraumdeckel 4 hinsichtlich seiner Farbgebung einheitlich ausgebildet ist.

Das Emblem 6 kann unterschiedlichste Formen haben, so die von den verschiedenen Automobilherstellern bekannten Kennzeichen. Darüber hinaus kann das Emblem 6 auch jede frei gewählte Form haben. Das Emblem 6 kann auch ein Bild, ein Wort, Zahlen, eine Kombination dieser Elemente und dergleichen sein. Die Umrißform der Lichtscheibe 13 richtet sich vorteilhaft nach der Umrißform des jeweiligen Emblems 6, damit der Übergang von der Lichtscheibe zum Rand der Einbauöffnung im Kofferraumdeckel 4 durch das Emblem selbst von außen verdeckt wird.

Die Montage des Leuchtengehäuses 21 ist einfach und kostengünstig durchführbar. Das Leuchtengehäuse 21 wird an die Rückseite des Kofferraumdekkels 4 so angelegt, daß die Lichtscheibe 13 die Öffnung 12 ausfüllt. Das Gehäuse 21 wird dann so an der Innenseite des Kofferraumdeckels 4 befestigt, daß die Außenseite 14 der Lichtscheibe 13 eine stetige Fortsetzung der Außenseite 15 des Kofferraumdeckels 4 bildet. Anschließend wird das Emblem 6 oder ein entsprechendes Symbol auf der Außenseite des Kofferraumdekkels 4 so montiert, daß der Spalt 17 zwischen dem Rand 16 der Öffnung 12 und derLichtscheibe 13 verdeckt wird. Die Ringdichtung 19 wird vor dem Einbau des Leuchtengehäuses 21 vormontiert und so weit auf die Lichtscheibe 13 geschoben, bis sie auf dem radial nach außen gerichteten Ringflansch 18 aufliegt, der mit Abstand von der Außenseite 14 der Lichtscheibe 13 vorgesehen ist.

Das Emblem 6 selbst besteht aus einem Material, das Licht nicht durchläßt. Es ist aber auch möglich, das Emblem 6 selbst aus lichtdurchlässigem Material herzustellen. In diesem Fall ist der Kofferraumdeckel 4 im Bereich der jeweiligen Teile des Emblems 6 lichtdurchlässig ausgebildet. In dem in Fig. 2 dargestellten Ausführungsbeispiel sind in diesem Falle der Ring 7 sowie die drei Stege 9 bis 11 aus lichtdurchlässigem Material hergestellt. Die Flächen des Kofferraumdeckels 4 im Bereich zwischen dem Ring 7 und den Stegen 9 bis 11 sind nicht lichtdurchlässig, sondern nur im Bereich unterhalb des Ringes 7 sowie der Stege 9 bis 11. Solange die Leuchtmittel 22 nicht eingeschaltet sind, hat das Emblem 6 seinen eigenen Farbton. So kann das Emblem 6 beispielsweise chromfarben ausgebildet sein. Wird das Lichtmittel 22 eingeschaltet, dringen die ausgesandten Strahlen durch den unterhalb des Ringes 7 und der Stege 9 bis 11 vorgesehenen lichtdurchlässigen Teil des Kofferraumdeckels 4 sowie durch den Ring 7 und die Stege 9 bis 11 selbst nach außen.

Es können aber auch das Emblem 6 und die Flächen des Kofferraumdeckels 4 im Bereich zwischen dem Ring 7 und den Stegen 9 bis 11 lichtdurchlässig sein.

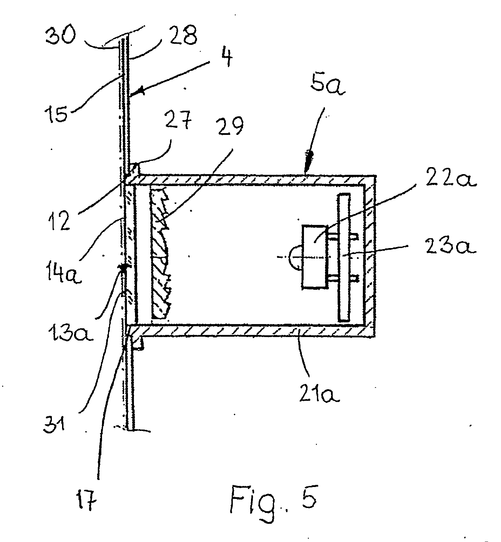

Fig. 5 zeigt eine weitere Ausführungsform einer Leuchte 5a. Sie hat das Leuchtengehäuse 21 a, indem wenigstens ein Leuchtmittel 22a untergebracht ist. Wie bei der vorigen Ausführungsform ist das Leuchtmittel 22a vorzugsweise eine LED, die auf der Platine 23a sitzt. Das Gehäuse 21a liegt mit einem radial nach außen ragenden Ringflansch 27 an der Innenseite 28 des Kofferraumdeckels 4 an. Er ist mit der Einbauöffnung 12 versehen, in welche das Leuchtengehäuse 21 a mit seinem freien Rand ragt. In dieses Ende des Gehäuses 21 a ist die Lichtscheibe 13a so eingesetzt, daß ihre Außenseite 14a bündig mit der Außenseite 15 des Kofferraumdeckels 4 liegt. Wie bei der vorigen Ausführungsform schließt die Lichtscheibe 13a das Leuchtengehäuse 21a.

Mit geringem Abstand hinter der Lichtscheibe 13a ist im Leuchtengehäuse 21 a im Strahlweg der vom Leuchtmittel 22a ausgehenden Strahlen eine Optikscheibe 29, zum Beispiel eine Fresnellinse, untergebracht.

Auf dem Kofferraumdeckel 4 befindet sich eine durch eine strichpunktierte Linie angedeutete Lackschicht 30. Auch auf der Lichtscheibe 13a ist eine Lackschicht 31 vorhanden. Sie ist einerseits so dünn, daß das vom Leuchtmittel 22a ausgesandte Licht durch diese Lackschicht 31 hindurchtreten kann, andererseits jedoch die Lichtscheibe 13a von außen nicht erkennen läßt. Der Kofferraumdeckel 4 weist somit ein einheitliches Aussehen auf. Erst wenn das Leuchtmittel 22a eingeschaltet wird und die Strahlen durch die Lichtscheibe 13a und die Lackschicht 31 nach außen gelangen, wird erkennbar, daß in diesem Bereich die Leuchte 5a vorhanden ist.

Im Unterschied zur vorigen Ausführungsform wird der Spalt 17 zwischen dem Rand der Lichtscheibe 13a und dem Rand der Einbauöffnung 12 beispielsweise ausgespachtelt, so daß ein einwandfreier Übergang von der Lichtscheibe 13a zum Kofferraumdeckel 4 erreicht wird. Durch das anschlie-ßende Überlackieren wird die Spachtelmasse überdeckt, so daß sie nicht mehr sichtbar ist. Wie schon bei der vorigen Ausführungsform liegt die Lichtscheibe 13a mit ihrer Außenseite 14a bündig zur Außenseite 15 des Kofferraumdeckels 4. Er hat dadurch ein einheitliches Aussehen.

Bei beiden Ausführungsformen kann die Leuchte 5, 5a an jeder geeigneten Stelle des Kofferraumdeckels 4 des Kraftfahrzeuges vorgesehen sein. Der Kofferraumdeckel kann auch die Heckklappe eines Kraftfahrzeuges sein. Die Leuchte kann darüber hinaus auch an jedem anderen geeigneten Bereich der Karosserie des Fahrzeuges vorgesehen werden, so beispielsweise an den seitlichen vorderen und/oder hinteren Kotflügeln. Die Leuchten 5, 5a können unterschiedlichste Signalfunktionen ausüben, zum Beispiel eine Bremsleuchte, eine Blinkleuchte oder dergleichen.

Der Kofferraumdeckel 4 oder die Heckklappe des Kraftfahrzeuges können auch aus durchsichtigem Kunststoff gespritzt oder gepreßt und anschließend im gewünschten Farbton lackiert werden. Die Leuchte 5, 5a kann auch in diesem Falle in der beschriebenen Weise an der Innenseite des Kofferraumdeckels 4 oder der Heckklappe an einer beliebigen Stelle angebracht werden. Im Bereich der Leuchte 5, 5a ist die Lackschicht wiederum nur so dick, daß die Lichtscheibe 13, 13a überdeckt wird, das vom Leuchtmittel 22, 22a ausgesandte Licht jedoch in ausreichendem Maße nach außen gelangen kann.

Es ist ferner möglich, den Kofferraumdeckel 4, die Heckklappe oder ein anderes Karosserieteil des Fahrzeuges aus undurchsichtigem Kunststoff herzustellen und die Lichtscheibe 13, 13a aus einem durchsichtigen Kunststoff zu spritzen. Anschließend werden der Kofferraumdeckel 4, die Heckklappe oder der entsprechende Karosserieteil und/oder die Lichtscheibe 13, 13a in der Wagenfarbe lackiert, so daß die Lichtscheibe von außen nicht erkennbar ist.

Anstelle der Lichtscheibe 13, 13a ist es möglich, im Bereich der Leuchte 5, 5a im Karosserieteil eine feine Perforation vorzusehen. Die Perforationsöffnungen werden mit transparentem Material gefüllt, insbesondere ausgegossen. Da die Perforationsöffnungen sehr kleinen Durchmesser haben, sind sie von außen nicht erkennbar. Das von dem hinter diesen Perforationsöffnungen befindliche Leuchtmittel 22, 22a ausgesandte Licht kann durch das transparente Material in den Perforationsöffnungen nach außen gelangen. Es ist auch möglich, den Austritt der Perforationsöffnungen mit der Lackschicht 31 zu bedecken, die wiederum nur so dick ist, daß die Perforationsöffnungen von außen zuverlässig nicht zu erkennen sind, das durch sie hindurchtretende Licht aber nach außen lassen.

Die Lichtscheibe 5a kann die unterschiedlichsten Umrißformen haben. Sie kann beispielsweise runden, insbesondere kreisförmigen, aber auch eckigen, insbesondere rechteckigen Umriß aufweisen. Entsprechend können die Perforationsöffnungen in einem runden oder eckigen Bereich vorgesehen sein.

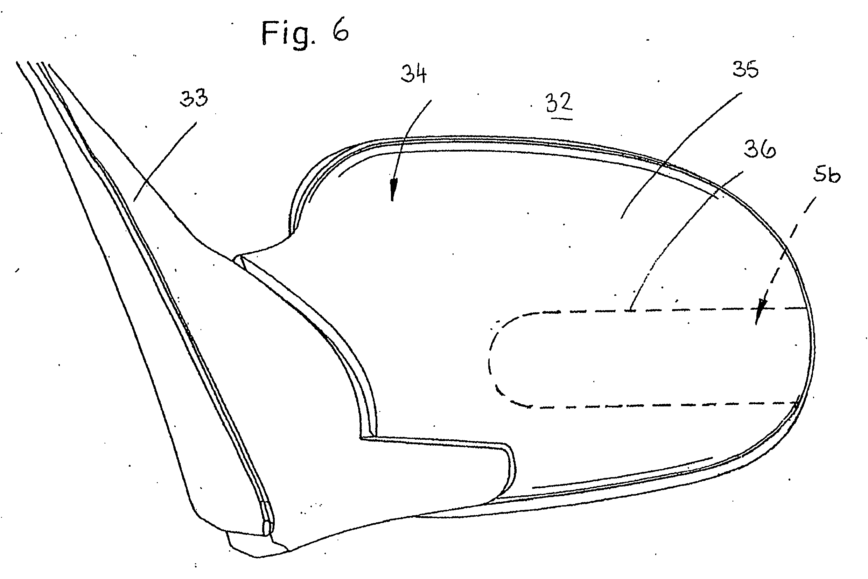

Fig. 6 zeigt die Möglichkeit, auch in einem Außenrückblickspiegel 32 eines Kraftfahrzeuges die Leuchte 5b vorzusehen. Der Außenrückblickspiegel 32 wird mit einem Spiegelfuß 33 in bekannter Weise am Kraftfahrzeug befestigt. Der Spiegelfuß 33 trägt den Spiegelkopf 34, der gegenüber dem Spiegelfuß 33 in und entgegen Fahrtrichtung des Kraftfahrzeuges in bekannter Weise abklappbar ist. Im Spiegelkopf 34 ist die Leuchte 5b vorgesehen, die beispielsweise als Wiederholblinkleuchte dient. Die in Fahrtrichtung nach vorn weisende Wandung 35 des Spiegelkopfes 34 ist in dem Bereich, in dem das von der Leuchte ausgehende Licht nach außen treten soll, aus durchsichtigem Kunststoff hergestellt. Er ist mit einer entsprechenden Farbe nur so dünn überlackiert, daß die im Spiegelkopf 34 untergebrachte Leuchte 5b von außen nicht zu erkennen ist, das von ihr ausgesandte Licht jedoch in ausreichendem Maße nach außen dringen kann. Im Ausführungsbeispiel ist dieser Bereich 36 durch eine gestrichelte Linie angegeben. Dieser Bereich 36 erstreckt sich vom äußeren Ende des Spiegelkopfes 34 in Richtung auf den Spiegelfuß 33 und endet mit Abstand von ihm. Dieser Leuchtbereich 36 kann selbstverständlich jede andere geeignete Umrißform haben.

Es ist auch möglich, das Gehäuse des Spiegelkopfes 34 im Bereich 36 so auszubilden, daß die Leuchte 5b innerhalb des Spiegelkopfes 34 von außen schwach zu erkennen ist.

## Patentansprüche

1. Außenrückblickspiegel für Fahrzeuge, vorzugsweise für Kraftfahrzeuge, mit einem Spiegelkopf (34), in dem wenigstens ein Leuchtmittel (22, 22a) vorgesehen ist und dessen Gehäuse (35) im Bereich (36) der vom Leuchtmittel (22, 22a) ausgesandten Strahlen zumindest teilweise lichtdurchlässig ist,
**dadurch gekennzeichnet, daß** das Leuchtmittel (22, 22a) Teil einer Leuchte (5b) ist, die mit ihrem Gehäuse im Gehäuse des Spiegelkopfes (34) untergebracht ist.

2. Außenrückblickspiegel nach Anspruch 1,
**dadurch gekennzeichnet, daß** das Gehäuse (35) des Spiegelkopfes (34) aus lichtdurchlässigem Kunststoff besteht, der außenseitig mit einer lichtundurchlässigen Farbschicht bedeckt ist, die vorteilhaft auf dem lichtdurchlässigen Bereich (36) eine solche Dicke hat, daß sie für die vom Leuchtmittel (22, 22a) ausgesandten Strahlen durchlässig ist.

3. Außenrückblickspiegel nach Anspruch 2,
**dadurch gekennzeichnet, daß** die Farbschicht eine solche Dicke hat, daß die Leuchte (5b) von außen nicht zu erkennen ist.

4. Außenrückblickspiegel nach einem der Ansprüche 1 bis 3,
**dadurch gekennzeichnet, daß** die Leuchte (5b) eine Wiederholblinkleuchte ist.

5. Außenrückblickspiegel nach einem der Ansprüche 1 bis 4,
**dadurch gekennzeichnet, daß** sich der lichtdurchlässige Bereich (36) vom äußeren Ende des Spiegelkopfes (34) aus in Richtung auf den Spiegelfuß (33) erstreckt.

6. Außenrückblickspiegel nach einem der Ansprüche 1 bis 5,
**dadurch gekennzeichnet, daß** der lichtdurchlässige Bereich (36) mit Abstand vom Spiegelfuß (33) endet.

7. Außenrückblickspiegel nach einem der Ansprüche 1 bis 6,
**dadurch gekennzeichnet, daß** das Leuchtmittel (22, 22a) eine LED ist.
